## Europäisches Patentamt
## European Patent Office
## Office européen des brevets

(19)

(11) Numéro de publication: **0 046 116 B1**

(12) **FASCICULE DE BREVET EUROPEEN**

(45) Date de publication du fascicule du brevet:
**12.06.85**

(51) Int. Cl.⁴: **G 01 V 1/104**

(21) Numéro de dépôt: **81401272.0**

(22) Date de dépôt: **06.08.81**

(54) Générateur d'ondes sismiques.

(30) Priorité: **13.08.80 FR 8017866**

(43) Date de publication de la demande:
**17.02.82 Bulletin 82/7**

(45) Mention de la délivrance du brevet:
**12.06.85 Bulletin 85/24**

(84) Etats contractants désignés:
**DE GB IT**

(56) Documents cités:
**GB - A - 1 437 766**
**GB - A - 2 026 164**
**US - A - 3 260 327**
**US - A - 3 368 642**
**US - A - 3 429 396**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Devaure, Bernard, 29, rue du Prieuré, F-33170 Gradignan (FR)**

(74) Mandataire: **Mongrédien, André et al, c/o BREVATOME 25, rue de Ponthieu, F-75008 Paris (FR)**

## Description

La présente invention concerne un dispositif de simulation de séisme. Ce dispositif permet de produire des ondes de choc dont les fréquences sont similaires, à un rapport λ près, aux fréquences des ondes de choc produites dans un séisme naturel et permet de les appliquer à un échantillon pour déterminer en particulier la tenue, au cours d'un séisme, de construction telles que des immeubles, des momuments, des centrales nucléaire, etc. .

On connaît de nombreux dispositifs permettant d'engendrer des ondes de choc dans le sol ou l'eau, tel que celui décrit dans le document GB-A 2 026 164.

Le dispositif de simulation, selon l'invention, permettant d'engendrer des ondes sismiques et comprenant un générateur d'ondes de choc, ce générateur étant formé d'un cylindre, fermé à l'une de ses extrémités par une première paroi, à l'autre extrémité par une deuxième paroi épaisse sur laquelle viennent se fixer des moyens permettant de produire les ondes de choc à l'intérieur du cylindre, ondes transmises de l'intérieur du cylindre vers l'extérieur au moyen d'ouvertures effectuées dans ladite première paroi, caractérisé en ce que:

– la première paroi porte à l'extérieur du cylindre un échantillon, contenu dans une cellule, auquel sont appliquées les ondes sismiques;
– les ondes sismiques appliquées à l'échantillon ont des fréquences similaires aux fréquences des ondes de choc produites dans un séisme naturel, le rapport de similitude entre les fréquences des ondes sismiques appliquées à l'échantillon et les fréquences des ondes du séisme naturel étant égal à λ, λ étant un nombre entier positif; et
– l'échantillon est constitué d'un sol supportant une maquette à échelle réduite dans le rapport $\frac{1}{\lambda}$ de la construction à réaliser.

Selon un mode de réalisation préféré de l'invention, les moyens produisant les ondes de choc sont constitués par des dispositifs pyrotechniques.

Selon un autre mode de réalisation préféré de l'invention, ce dispositif de simulation comprend en outre des moyens permettant d'éliminer les ondes de choc de fréquences élevées, obtenues par réflexion à l'intérieur du cylindre. Ces moyens sont constitués de préférence par un dispositif mécanique placé à l'intérieur du cylindre et à proximité de la première paroi, ce dispositif jouant le rôle de filtre passe-bas.

D'autres caractéristiques et avantages de l'invention ressortiront mieux de la description qui va suivre, donnée à titre purement illustratif et non limitatif en référence aux figures annexées dans lesquelles:

– la figure 1 représente schématiquement un dispositif de simulation de séismes selon l'invention,
– la figure 2 représente schématiquement le filtre mécanique du dispositif de la figure 1;

– la figure 3 représente l'amplitude du signal (A) fourni par le dispositif sans filtre mécanique en fonction du temps (t);
– la figure 4 représente l'amplitude du signal (A) fourni par le dispositif muni du filtre mécanique en fonction du temps (t).

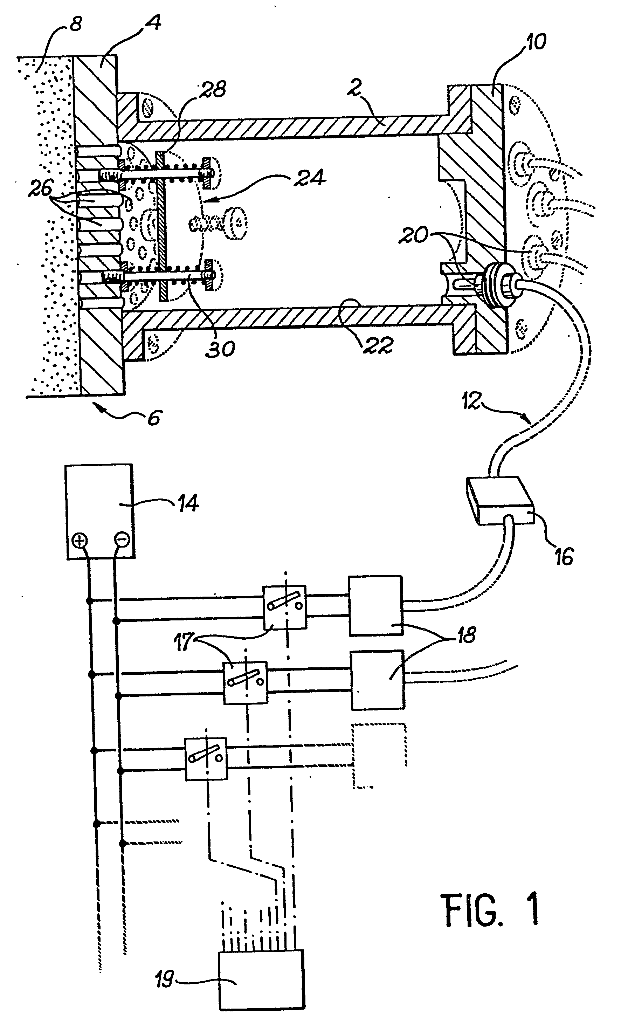

Le dispositif de simulation représenté sur la figure 1, comprend un générateur d'ondes sismiques formé d'un cylindre 2 fermé à l'une de ses extrémités par l'une des parois 4 d'une cellule 6 contenant un échantillon quelconque 8 tel qu'un sol. A son autre extrémité, le cylindre 2 est fermé par une paroi épaisse 10 sur laquelle viennent se fixer dix dispositifs pyrotechniques 12. Ces dispositifs pyrotechniqes 12 sont reliés à une source d'alimentation 14 par l'intermédiaire de deux tiroirs, l'un 19, émetteur d'ordre, et l'autre 18, récepteur d'ordre, d'un connecteur 16 et d'un édifice explosif 20 placé à l'intérieur de la paroi épaisse 10.

La mise à feu des dispositifs pyrotechniques 12, qui peut être programmée au moyen d'un programmateur incorporé dans le tiroir émetteur d'ordre 19, provoque, lors de l'explosion, des ondes de choc qui se propagent dans le cylindre 2 et qui se réfléchissent sur les parois internes 22 dudit cylindre. La mise à feu des différents dispositifs pyrotechniques 12 peut se faire, soit en une seule fois, c'est-à-dire mise à feu des dix dispositifs à la fois, soit en plusieurs fois, c'est-à-dire mise à feu d'un dispositif pyrotechnique l'un après l'autre. Dans ce dernier cas, le temps entre chaque explosion est compris entre 1 et 18 millisecondes. La mise à feu de tel ou tel dispositif pyrotechnique est assurée au moyen d'un relais électrique 17 relié au programmateur incorporé dans le tiroir émetteur d'ordres 19.

Les ondes émises par réflexion sur les parois internes 22 du cylindre 2 peuvent présenter des fréquences élevées que l'on peut éliminer au moyen d'un dispositif mécanique 24 jouant le rôle d'un filtre passe-bas. Ce dispositif mécanique 24 est placé à l'intérieur du cylindre 2 et à proximité de la paroi 4 de la cellule 6.

Les ondes de choc filtrées ou non, suivant la gamme de fréquences que l'on désire obtenir, sont transmises de l'intérieur du cylindre 2 à l'intérieur de la cellule 6 en traversant la paroi 4 de celle-ci par l'intermédiaire d'ouvertures 26. Ces ondes de choc sont alors transmises au sol 8 provoquant ainsi des mouvements de celui-ci similaires à ceux rencontrés lors de séismes naturels.

La simulation de séismes recherchée est réalisée en disposant une maquette (non représentée) à la surface du sol 8, cette maquette étant une maquette à échelle réduite dans le rapport $\frac{1}{\lambda}$ d'une construction quelconque. Cette maquette est maintenue en place, soit en positionnant le sol 8 horizontalement de façon que la paroi 4, en contact avec ledit sol soit placée en-dessous de celui-ci, soit en plaçant l'ensemble dans une nacelle pivotante située à l'extrémité d'un bras d'une centrifugeuse, tournant sous l'effet d'une accélération égale à λ fois la valeur de l'accélération de la pesanteur (9,81 m/s²), car la maquette présente des dimensions égales à $\frac{1}{\lambda}$ fois celles de la construction et que l'échelle des temps dans le dispositif de l'invention est de $\frac{1}{\lambda}$ fois l'échelle des temps «réels». Le facteur $\lambda$ est de préférence égal à 100.

L'utilisation d'une centrifugeuse permet, sous l'effet de la force centrifuge, de maintenir plaquée la maquette sur le sol 8 et le sol 8 contre la paroi 4, lorsque cette dernière est en position verticale à l'état de repos, ou horizontale sous l'action de la force centripète.

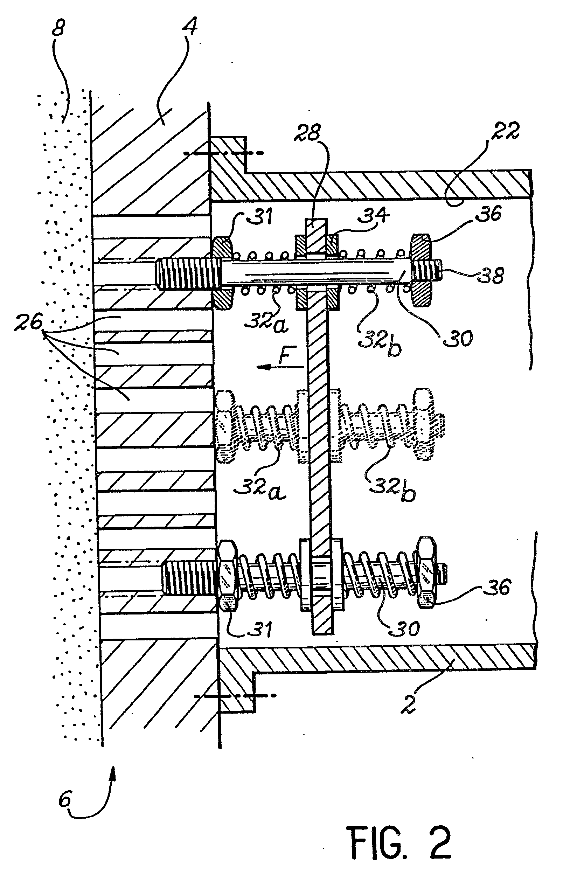

La figure 2 représente schématiquement le filtre mécanique 24 de façon plus détaillée. Ce filtre mécanique est constitué par une plaque 28 maintenue par des goujons 30 visés dans la paroi 4 de la cellule 6 et maintenus en place au moyen de contre-écrous tels que 31. Cette plaque 28 n'ayant aucun contact avec les parois internes 22 du cylindre, de façon à permettre le passage des ondes de choc du cylindre à la cellule comme décrit précédemment, peut sous l'impact des ondes de choc se déplacer comme représenté par la flèche F. Le déplacement de la plaque 28 est régulé au moyen de ressorts 32 hélicoïdaux disposés autour des goujons 30.

Les ressorts 32a et 32b situés sur le même goujon 30 et de part et d'autre de la plaque 28 produisent des effets antagonistes permettant de ramener la plaque dans sa position initiale (position avant déplacement). En effet, lorsque le ressort 32a se contracte, le ressort 32b se dilate. Les ressorts 32 peuvent être plaqués contre la plaque 28 au moyen de rondelles telles que 34 et sont maintenus sur les goujons 30 moyen d'écrous 36, vissés sur l'extrémité libre 38 des goujons 30.

Ces ressorts 32 présentent une raideur liée à la fréquence que l'on désire obtenir. Seules les ondes de choc de fréquence élevée, c'est-à-dire supérieure à 400 Hertz, arrivant sur la plaque 28 sont absorbées par le mouvement de celle-ci.

Bien entendu, toute autre forme de dispositif mécanique jouant le rôle de filtre passe-bas peut être envisagée sans sortir pour cela du domaine de l'invention.

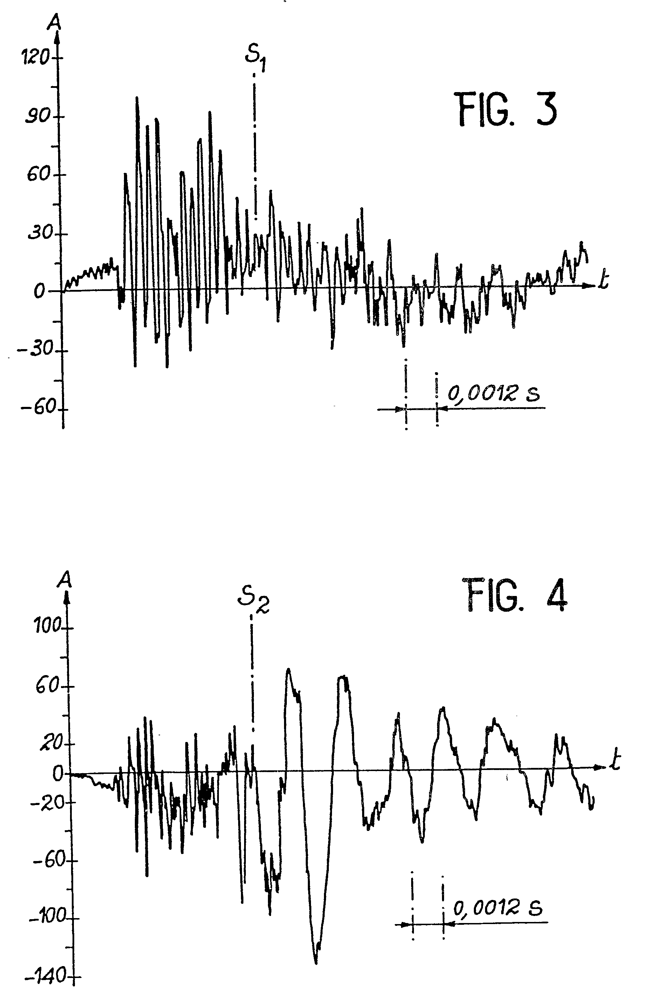

Le dispositif de simulation de séismes utilisé sans le filtre mécanique permet d'obtenir des ondes de choc dont le spectre des fréquences présente un maximum dans une bande située aux alentours de 1500 Hz et au-delà. Le signal obtenu est représenté sur la figure 3. Le repère $S_1$ permet d'indiquer la partie utile du signal non filtré. Les oscillations situées avant ce repère $S_1$ sont dues à l'explosion des différents dispositifs pyrotechniques.

Le dispositif de simulation de séismes utilisé avec le filtre mécanique 24 permet d'obtenir des ondes de choc dont le spectre des fréquences présente un maximum dans la bande 200–400 Hz. Le signal obtenu est représenté sur la figure 4. Comme précédemment, le repère $S_2$ indique la partie utile du signal filtré.

L'utilisation d'un filtre mécanique présentant une plaque alourdie par rapport au filtre fournissant le signal représenté sur la figure 4 et où des ressorts de plus grande raideur permet d'obtenir des fréquences inférieures à 100 Hz, c'est-à-dire d'éliminer toutes les ondes de choc présentant des fréquences supérieures à 100 Hertz.

Ce dispositif de simulation de séismes permet donc la production d'ondes de choc dont les spectres des fréquences présentent des maxima dans les bandes de fréquences situées à l'intérieur de la plage 100–1500 Hz. En tenant compte des lois de la similitude et du coefficient $\lambda$ de réduction d'échelle qui est égal à 100, la plage des fréquences devient 1–15 Hz, ce qui correspond à la grande majorité des fréquences produites dans des séismes naturels.

## Revendications

1. Dispositif de simulation de séismes permettant d'engendrer des ondes sismiques et comprenant un générateur d'ondes de choc, ce générateur étant formé d'un cylindre (2), fermé à l'une de ses extrémités par une première paroi (4), à l'autre extrémité par une deuxième paroi épaisse (10) sur laquelle viennent se fixer des moyens (12) permettant de produire les ondes de choc à l'intérieur du cylindre, ondes transmises de l'intérieur du cylindre (2) vers l'extérieur au moyen d'ouvertures (26) effectuées dans ladite première paroi (4), caractérisé en ce que:

– la première paroi (4) porte à l'extérieur du cylindre un échantillon (8), contenu dans une cellule (6), auquel sont appliquées les ondes sismiques;
– les ondes sismiques appliquées à l'échantillon ont des fréquences similaires aux fréquences des ondes de choc produites dans un séisme naturel, le rapport de similitude entre les fréquences des ondes sismiques appliquées à l'échantillon et les fréquences des ondes du séisme naturel étant égal à $\lambda$, $\lambda$ étant un nombre entier positif; et
– l'échantillon (8) est constitué d'un sol supportant une maquette à échelle réduite dans le rapport $\frac{1}{\lambda}$ de la construction à réaliser.

2. Dispositif de simulation selon la revendication 1, caractérisé en ce que les moyens produisant les ondes de choc sont constitués par des dispositifs pyrotechniques (12).

3. Dispositif de simulation selon l'une quelconque des revendications 1 et 2, caractérisé en ce qu'il comprend en outre des moyens (24) permettant d'éliminer les ondes de choc de fréquences élevées, obtenues par réflexion à l'intérieur du cylindre.

4. Dispositif de simulation selon la revendication 3, caractérisé en ce que les moyens permettant d'éliminer les fréquences élevées des ondes de choc sont constitués par un dispositif mécanique (24) jouant le rôle de filtre passe-bas, placé à l'intérieur du cylindre (2) et à proximité de la première paroi (4).

5. Dispositif de simulation selon la revendication 4, caractérisé en ce que le dispositif mécanique est constitué par des goujons (30) vissés dans ladite première paroi (4) et par une plaque (28) disposée entre deux ressorts (32a, 32b) hélicoïdaux identiques, disposés autour de chaque goujons (30), ladite plaque (28) n'ayant aucun contact avec le cylindre (2).

6. Dispositif de simulation selon la revendication 5, caractérisé en ce que les ressorts (32) sont maintenus sur les goujons (30) au moyen d'écrous (36) vissés sur l'extrémité libre (38) desdits goujons.

7. Dispositif de simulation selon l'une quelconque des revendications 5 et 6, caractérisé en ce que les goujons (30) sont au nombre de quatre.

8. Dispositif de simulation selon la revendication 2, caractérisé en ce que les dispositifs pyrotechniques (12) sont au nombre de dix.

9. Dispositif de simulation selon l'une quelconque des revendications 1 à 8, caractérisé en ce que le nombre λ est égal à 100.

**Claims**

1. Earthquake-simulation device, for generating seismic waves and comprising a shock wave generator, said generator being formed as a cylinder (2), closed at one of its ends by a first wall (4) and at the other end by a second thick wall (10), on which can be fixed means (12) permitting the production of shock waves in the interior of the cylinder, waves being transmitted from the interior of the cylinder (2) towards the exterior by means of openings (26) formed in said first wall (4), characterized in that:

– first wall (4) holds externally of the cylinder, a sample (8), contained in a cell (6), to which the seismic waves are applied;
– the seismic waves applied to the sample have frequencies similar to the frequencies of the shock waves produced in a natural earthquake, the ratio between the frequencies of seismic waves applied to the sample and the frequencies of natural seismic waves being equal to λ, λ being a positive integer; and
– the sample (8) constitutes a floor member supporting a model whose scale is reduced in ratio $\frac{1}{\lambda}$ to the construction to be formed.

2. Simulation device according to Claim 1, characterized in that the means producing shock waves comprise pyrotechnic devices (12).

3. Simulation device according to either of Claims 1 and 2, characterized in that it additionally comprises means (24) for eliminating shock waves of elevated frequency resulting from internal reflection in the cylinder.

4. Simulation device according to Claim 3, characterized in that the means for eliminating elevated frequencies of shock waves comprise a mechanical device (24) acting as a low-pass filter, located in the interior of the cylinder (2) near the first wall (4).

5. Simulation device according to Claim 4, characterized in that the mechanical device comprises studs (30) screwed into said first wall (4) and a plate (28) disposed between two identical helical springs (32a, 32b) disposed around said studs (30), said plate (28) having no contact with the cylinder (2).

6. Simulation device according to Claim 5, characterized in that the springs (32) are held on the studs (30) by means of nuts (36) screwed onto the freed end (38) of said studs.

7. Simulation device according to either of Claims 5 and 6, characterized in that there are four studs (30).

8. Simulation device according to Claim 2, characterized in that there are ten pyrotechnic devices (12).

9. Simulation device according to any one of Claims 1 to 8, characterized in that the number λ is 100.

**Patentansprüche**

1. Einrichtung zum Simulieren von Erdbeben, mit der seismische Wellen erzeugbar sind und die einen Stosswellengenerator umfasst, der von einem Zylinder (2) gebildet ist, welcher an einem seiner Enden mit einer ersten Wand (4) und an dem anderen Ende mit einer zweiten, dicken Wand (10) verschlossen ist, an der Mittel (12) befestigbar sind, mit denen Stosswellen im Inneren des Zylinders erzeugbar sind, wobei die Wellen aus dem Inneren des Zylinders (2) nach aussen mittels in der ersten Wand (4) ausgebildeter Öffnungen (26) übertragbar sind, dadurch gekennzeichnet, dass die erste Wand (4) ausserhalb des Zylinders eine Probe (8) trägt, die in einer Zelle (6) enthalten ist, auf die die seismischen Wellen angewendet werden, die auf die Probe angewendeten seismischen Wellen ähnliche Frequenzen wie die Frequenzen der bei einem natürlichen Erdbeben erzeugten Stosswellen aufweisen, wobei das Ähnlichkeitsverhältnis zwischen den Frequenzen der auf die Probe angewendeten seismischen Wellen und den Frequenzen der Wellen bei einem natürlichen Erdbeben gleich λ ist, wobei λ eine positive, ganze Zahl ist, und die Probe (8) von einem Boden gebildet ist, der ein Modell in einem kleineren Massstab mit dem Verhältnis 1/λ der auszuführenden Konstruktion trägt.

2. Einrichtung zum Simulieren nach Anspruch 1, dadurch gekennzeichnet, dass die die Stosswellen erzeugenden Mittel von pyrotechnischen Einrichtungen (12) gebildet sind.

3. Einrichtung zum Simulieren nach Anspruch 1 oder 2, dadurch gekennzeichnet, dass sie ferner Mittel (24) aufweist, mit denen Stosswellen höherer Frequenzen ausschliessbar sind, die durch Reflexion am Inneren des Zylinders erhalten werden.

4. Einrichtung zum Simulieren nach Anspruch 3, dadurch gekennzeichnet, dass die Mittel, mit denen höhere Frequenzen der Stosswellen ausschliessbar sind, von einer mechanischen Einrichtung (24) gebildet sind, die die Rolle eines Tiefpass-Filters spielt und im Inneren des Zylinders (2) und in der Nähe der ersten Wand (4) angeordnet ist.

5. Einrichtung zum Simulieren nach Anspruch 4, dadurch gekennzeichnet, dass die mechanische Einrichtung von in die erste Wand (4) eingeschraubten Bolzen (30) und einer Platte (28) gebildet ist, die zwischen zwei identischen Schraubfedern (32a, 32b) angeordnet sind, die um jeden Schraubbolzen (30) angeordnet sind, und dass die Platte (28) keine Berührung mit dem Zylinder (2) hat.

6. Einrichtung zum Simulieren nach Anspruch 5, dadurch gekennzeichnet, das die Federn (32) auf den Bolzen (30) mittels Muttern (36) gehalten sind, die auf das freie Ende (38) der Bolzen aufgeschraubt sind.

7. Einrichtung zum Simulieren nach Anspruch 5 und 6, dadurch gekennzeichnet, dass die Anzahl der Bolzen (30) vier beträgt.

8. Einrichtung zum Simulieren nach Anspruch 2, dadurch gekennzeichnet, dass die Anzahl der pyrotechnischen Einrichtungen (12) zehn beträgt.

9. Einrichtung zum Simulieren nach einem der Ansprüche 1 bis 8, dadurch gekennzeichnet, dass die Zahl $\lambda$ gleich 100 ist.

FIG. 1

FIG. 2

FIG. 3

$S_1$

0,0012 s

FIG. 4

$S_2$

0,0012 s